(19) **Europäisches Patentamt**

**European Patent Office**

**Office européen des brevets**

(11) **EP 0 819 884 B1**

(12) **FASCICULE DE BREVET EUROPEEN**

(45) Date de publication et mention
de la délivrance du brevet:
**26.02.2003 Bulletin 2003/09**

(51) Int Cl.⁷: **F21V 8/00**, F21V 9/14

(21) Numéro de dépôt: **97401685.9**

(22) Date de dépôt: **11.07.1997**

(54) **Dispositif d'éclairage et application à l'éclairage d'un écran transmissif**

Beleuchtungsvorrichtung und Verwendung zur Beleuchtung von einer transmissiven Anzeige

Illumination device and application for illumination of a transmissive display

(84) Etats contractants désignés:
**DE GB IT NL**

(30) Priorité: **16.07.1996 FR 9608854**

(43) Date de publication de la demande:
**21.01.1998 Bulletin 1998/04**

(73) Titulaire: **Thales**
**75008 Paris (FR)**

(72) Inventeurs:
• **Lehureau, Jean-Claude**
**94117 Arcueil Cedex (FR)**

• **Joubert, Cécile**
**94117 Arcueil Cedex (FR)**
• **Loiseaux, Brigitte**
**94117 Arcueil Cedex (FR)**

(56) Documents cités:
**EP-A- 0 597 261**      **EP-A- 0 704 655**
**EP-A- 0 720 040**      **GB-A- 2 272 277**
**US-A- 4 798 448**      **US-A- 5 211 463**

• **"liquid crystal display backlight with polarization" IBM TECHNICAL DISCLOSURE BULLETIN, vol. 38, no. 2, février 1995, pages 533-535, XP000502679**

**Description**

Le domaine de l'invention est celui des dispositif d'éclairage et notamment des dispositifs d'éclairage couplé à un écran transmissif de visualisation type écran à cristaux liquides.

De manière générale, les écrans à cristaux liquides sont réalisés par des technologies de photolithographie. Ils associent une matrice de commande à une matrice d'électrodes commandant des éléments à biréfringence variable. Chaque élément est bordé d'un filtre coloré et de feuilles polarisantes de manière à moduler en amplitude une seule couleur. En lumière naturelle, la transparence d'un tel écran est de l'ordre de 5%. En lumière convenablement polarisée, cette transparence est doublée.

C'est pourquoi, on est amené à utiliser des sources lumineuses dont les plus efficaces sont des tubes luminescents dans lesquels une décharge électrique est émettrice de lumière ultra violette, convertie en visible par un phosphore photo-luminescent déposé sur l'enveloppe du tube. L'efficacité de ces tubes est typiquement de l'ordre de 80 Lumens/Watt. La luminescence maximale du tube est de l'ordre de 30 000 Candela/m$^2$ dans le blanc.

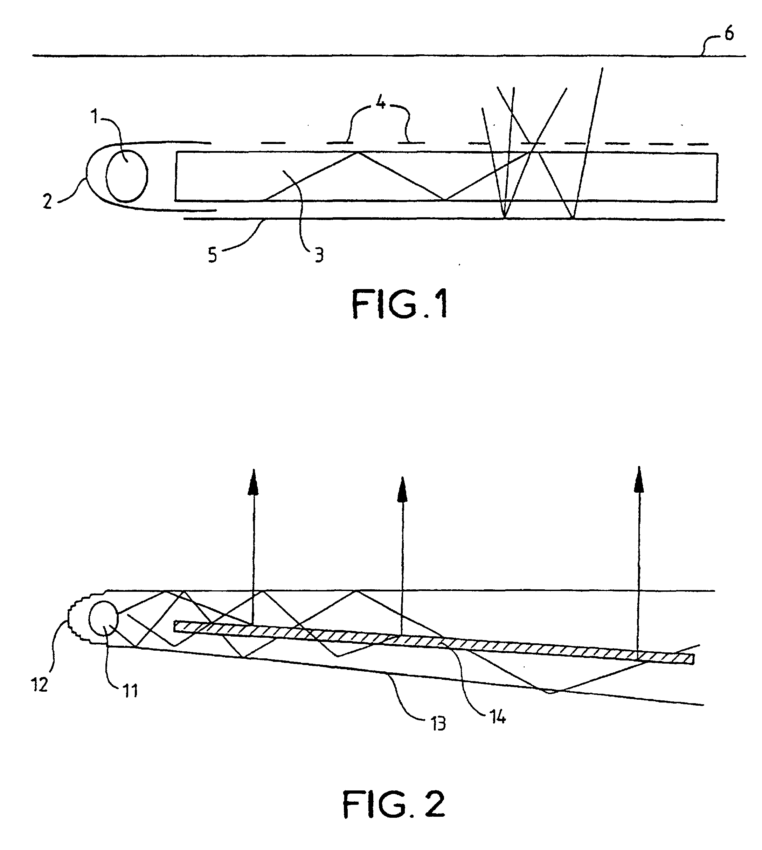

Les moyens de répartition de la lumière du tube sur toute la surface de l'écran sont représentés en figure 1.

Le tube 1 est couplé par une enveloppe réflectrice 2 à un guide d'onde 3, constitué par exemple d'une feuille de plastique de quelques millimètres d'épaisseur. La lumière est extraite du guide par des points de diffusion 4, répartis sur la surface du film.

L'ensemble peut être complété par un rétrodiffuseur 5 pour augmenter le flux lumineux extrait en direction de l'écran 6.

Dans ce type de configuration, le bilan de luminance et le bilan de flux peuvent, typiquement être les suivants :

| Tube de 2 Watts | 180 Lumens | 60 cm$^2$Sr | 30000 Cd/m$^2$ |
| Entrée du Guide | 120 Lumens | 40 cm$^2$Sr | 30000 Cd/m$^2$ |
| Surface de guide | 120 Lumens | 1000 cm$^2$Sr | 1200 Cd/m$^2$ |
| Sortie visualisation | 6 Lumens | 1000 cm$^2$Sr | 60 Cd/m$^2$ |

Le problème majeur rencontré dans ce type de dispositif d'éclairage réside dans la faible efficacité d'extraction de la lumière, ladite lumière n'étant d'autre part pas polarisée en sortie alors que les matrices à cristaux liquides fonctionnent en lumière polarisée.

Pour illuminer un écran transmissif avec suffisamment d'énergie, dans la direction désirée, c'est à dire perpendiculairement au plan du guide et au plan de l'écran, il est donc indispensable de prévoir en amont des sources lumineuses de forte puissance.

Or à l'heure actuelle on cherche de plus en plus à obtenir des réductions importantes de la puissance électrique consommée dans ce type de dispositif. En effet, dans le domaine des écrans portables, le poids des batteries autorisé limite l'autonomie de fonctionnement ou bien encore dans le domaine automobile ou avionique où les écrans sont intégrés à des planches de bord et pour lesquels une consommation électrique excessive risque de se traduire par un échauffement important.

Il est connu de la demande de brevet EP 0 704 655 un dispositif de lumière comportant une structure réseau macroscopique, pouvant présenter une structure en relief de dimensions telles qu'elle génère des phénomènes de diffraction, pour favoriser la collimation.

Dans ce contexte, l'invention a pour objet un dispositif d'éclairage permettant une réduction importante de la puissance électrique consommée grâce à une efficacité d'extraction de la lumière améliorée, et ce grâce à des moyens permettant d'extraire de la lumière polarisée dans une direction utile.

Plus précisément l'invention a pour objet un dispositif d'éclairage comprenant une source lumineuse et un guide d'onde de lumière couplé à ladite source lumineuse, caractérisé en ce que le guide d'onde de lumière comporte un réseau d'indice organisé en strates orientées à environ 45° par rapport à l'axe du guide de lumière, dans un matériau photosensible, pour drffracter des rayons lumineux émergents issus de la source, dans une direction sensiblement perpendiculaire à la surface du guide d'onde.

L'invention a également pour objet un dispositif d'éclairage comprenant une source lumineuse et un guide d'onde de lumière couplé à ladite source lumineuse caractérisé en ce que le guide d'onde de lumière comporte un élément diffractant constitué par un réseau en relief dans le plan du guide présentant des strates orientées à 45° par rapport à la normale au plan du guide de lumière pour diffracter des rayons lumineux émergents issus de la source dans une direction sensiblement perpendiculaire à la surface du guide d'onde.

Avantageusement, ce réseau diffractant gravé peut être compris entre deux miroirs de manière à créer une cavité résonante, l'ensemble de cette cavité pouvant produire les mêmes effets qu'un élément holographique.

Avantageusement, le dispositif d'éclairage peut comprendre à l'extrémité du guide, opposée à la source lumineuse, une lame quart d'onde et un miroir parallèle à ladite lame quart d'onde et comprendre également un miroir situé dans un plan parallèle à la surface du guide et opposé au plan d'extraction de la lumière.

Avantageusement le guide d'onde de lumière peut présenter une forme de dièdre divergent par rapport à la source lumineuse, de manière à augmenter le flux lumineux, extrait du guide d'onde et collimaté dans une direction sensiblement perpendiculaire au plan du guide.

L'invention a encore pour objet un dispositif d'éclairage pour écran transmissif de visualisation caractérisé en ce qu'il comprend une superposition de trois dispositifs d'éclairage, un premier dispositif A comportant une source de lumière émettant dans le rouge, un deuxième dispositif B comportant une source de lumière émettant dans le vert, un troisième dispositif C comportant une source de lumière émettant dans le bleu.

Ce type de dispositif d'éclairage présente le grand intérêt d'être efficace pour l'ensemble de l'énergie délivrée au niveau d'une source de lumière, dans la mesure ou chaque élément diffractant est adapté à la longueur d'onde délivrée par la source. On parvient ainsi à des luminances sensiblement 3 fois supérieures à celle obtenue avec des sources blanches.

Les dispositifs d'éclairage selon l'invention sont en mesure de délivrer une lumière polarisée par exemple du type p. Pour utiliser toute l'énergie lumineuse qui reste confinée correspondant à la lumière polarisée s dans le guide et qui n'est pas extraite, le dispositif d'éclairage peut avantageusement comprendre des moyens pour convertir la lumière polarisée s en lumière polarisée p, de manière a également extraire cette lumière hors du guide de lumière, selon la direction désirée.

L'invention sera mieux comprise et d'autres avantages apparaîtront à la lecture de la description qui va suivre, donnée à titre non limitatif et grâce aux figures annexées parmi lesquelles :

- la figure 1 illustre un dispositif d'éclairage selon l'art connu ;
- la figure 2 illustre un dispositif d'éclairage selon l'invention ;
- la figure 3 illustre un exemple de guide en forme de dièdre utilisé dans un dispositif d'éclairage selon l'invention ;
- la figure 4 illustre l'efficacité de diffraction exprimée en pourcentage en fonction de l'angle d'incidence dans un exemple d'élément holographique utilisé dans l'invention ;
- la figure 5 illustre un exemple de dispositif d'éclairage comprenant des moyens pour extraire l'ensemble de la lumière émise par la source de lumière ;
- la figure 6a illustre un exemple de structure diffractante comprenant une cavité résonante avec un réseau gravé ;
- la figure 6b illustre le chemin optique suivi par un rayon lumineux induit dans la structure diffractante illustrée en figure 6a;
- la figure 7 illustre un dispositif d'éclairage pour écran de visualisation, utilisant la superposition de trois dispositifs d'éclairage.

De manière générale, le dispositif d'éclairage selon l'invention comprend une source de lumière 11 couplée à un guide de lumière 13. Ce couplage peut typiquement être réalisé par un collimateur 12. L'élément diffractant 14 est placé au coeur du guide et diffracte des rayons émergents dans une direction sensiblement perpendiculaire au plan du guide comme illustré en figure 2.

A l'entrée du guide, la lumière occupe toutes les incidences comprises entre 90° et l'angle limite de réflexion limite à la sortie du guide (de l'ordre de 40°).

Selon une première variante l'élément diffractant est un élément holographique. Plus précisément cet élément peut faire partie intégrante du guide en étant inscrit dans le volume du guide ou à la surface de ce dernier. Pour réaliser l'hologramme, on fait interférer de manière classique, deux faisceaux cohérents, dans le plan d'une couche photosensible. Pour diffracter des rayons émergents dans une direction sensiblement perpendiculaire, l'élément holographique peut avantageusement être réalisé en élaborant un réseau d'indice présentant des strates d'indice orientées à 45° par rapport à la normale au plan du guide de lumière, dans un matériau photosensible.

Pour l'enregistrement, on fait interférer deux faisceaux cohérents dans le plan de la couche photosensible, symétriques par rapport à l'axe des strates à 45°. L'angle qu'ils forment avec cet axe, définit le pas des franges suivant la formule :

$$\rho = \lambda/2 \sin u$$

où "u" est le demi-angle formé par les deux faisceaux.

Pour la ou les longueurs d'onde visibles que l'on veut extraire du plan du guide, cet angle est sensiblement égal à 45°, ce qui correspond à un enregistrement impossible dans la mesure ou l'un des faisceaux de lumière à l'inscription, serait produit dans le plan du guide. On choisit donc pour l'enregistrement des longueurs d'ondes différentes des longueurs d'ondes visibles prévues . On peut notamment choisir des longueurs d'ondes ultraviolettes ce qui réduit l'angle entre les faisceaux et permet un grand choix de matériaux photoréfractifs.

Le matériau enregistré doit présenter une variation d'indice de réfraction en fonction de l'insolation à l'enregistrement. Il peut typiquement s'agir de gélatine bichromaté ou de photopolymère correspondant aux matériaux classiques dans lesquels on réalise des enregistrements holographiques.

Le guide d'onde dans lequel est réalisé le réseau holographique peut avantageusement présenter une structure de dièdre.

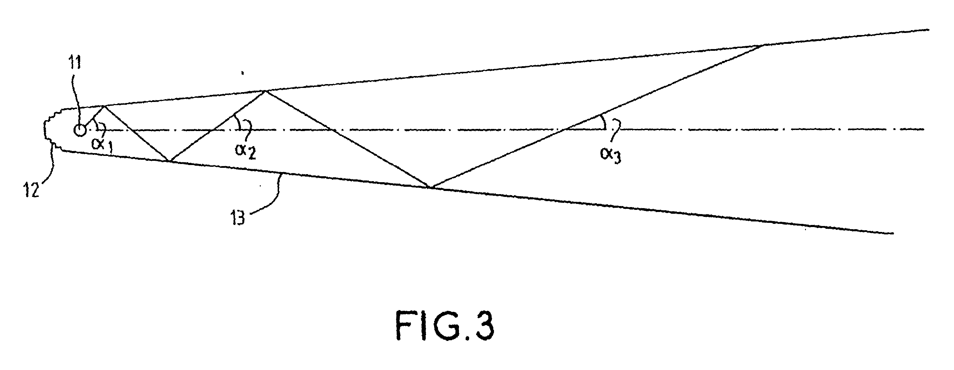

La figure 3 illustre comment des rayons émergents peuvent être ramenés dans le cône de capture de l'hologramme correspondant à l'ensemble des angles d'incidence pour lesquels l'hologramme est diffractant dans la direction choisie, en l'occurrence perpendiculairement au plan du guide. Il apparaît sur cette figure que les angles $\alpha_1$, $\alpha_2$ et $\alpha_3$ ici représentés diminuent progressivement le long de l'axe optique.

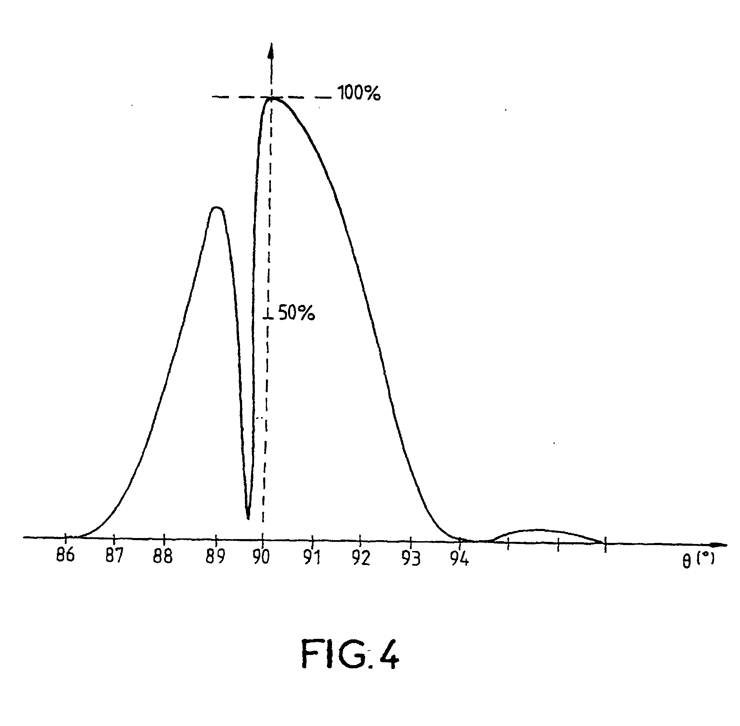

Pour une bonne efficacité, l'angle du dièdre est choisi inférieur ou égal à l'angle maximum de capture de l'hologramme. A titre d'exemple la figure 4 illustre l'acceptance angulaire d'un réseau de phase (due a une variation périodique d'indice $\Delta n = 0,008$), sous la forme de son efficacité de diffraction (exprimée en %) en fonction de l'angle d'incidence $\theta$ et ce pour un réseau d'épaisseur voisine de $5~\mu m$.

Il est à noter qu'il convient d'adapter mutuellement l'acceptance angulaire de l'hologramme et l'angle du dièdre de façon à ce que la majorité des rayons se propageant dans le guide se retrouvent au moins une fois à l'intérieur du cône d'acceptance de l'hologramme.

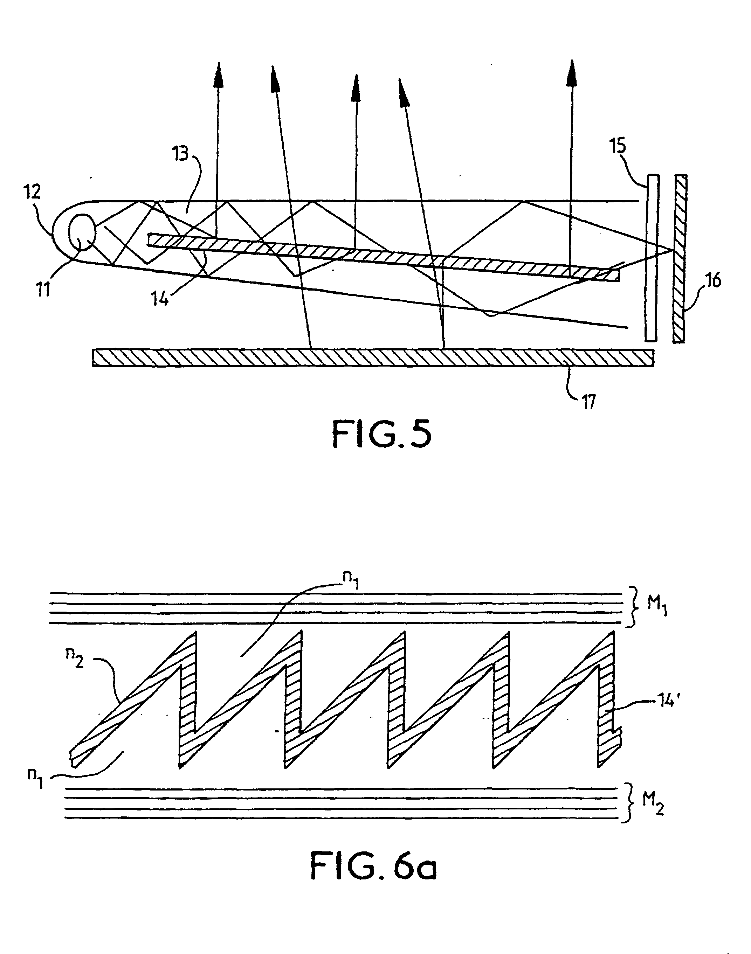

Par ailleurs l'intérêt de l'utilisation d'un élément holographique diffractant réside dans la très bonne collimation qu'il procure. En effet l'étendue géométrique d'un faisceau monochromatique n'est pas modifiée par déflexion sur une structure holographique homogène. Comme l'illustre la figure 5 ceci se traduit par la formule :

$$S x \Omega = S' x \Omega'$$

ou $\Omega$ et $\Omega'$ sont des angles solides ; en ayant une surface S' très grande devant la surface S on obtient une divergence traduite par l'angle $\Omega'$ très petite.

Par ailleurs, une structure diffractante orientée à 45° dans le guide, possède la propriété de transmettre la polarisation s d'un rayon incident, définie perpendiculaire au plan d'incidence, alors qu'au contraire la polarisation p dans le plan d'incidence est fortement réfléchie, puisque les rayons incidents issus de la source arrivent en incidence de Brewster par rapport à la structure diffractante. Le dispositif d'éclairage selon l'invention permet ainsi de délivrer une lumière très collimatée et polarisée.

Selon une variante de l'invention, le dispositif d'éclairage comprend également des moyens pour transformer la polarisation s transmise de manière à l'extraire également du dispositif.

La figure 5 illustre cette variante dans laquelle sont prévues une lame quart d'onde 15, un miroir 16 et un miroir 17. La fonction de la lame quart d'onde constituée par exemple d'un matériau biréfringent est d'inverser la polarisation transmise s en polarisation p. Par le couple de miroirs 16 et 17, cette polarisation p est renvoyée sur l'élément diffractant. Cette lumière polarisée p suit alors le chemin inverse et est réfléchie par l'élément diffractant. Il n'est pas possible de renvoyer cette lumière exactement dans la direction de la lumière diffractée à l'aller car l'élément holographique la renverrait alors dans le guide. C'est pourquoi le miroir 17 est légèrement incliné, de manière à renvoyer cette lumière dans une direction légèrement différente de manière à échapper au cône d'acceptance de l'hologramme et être ainsi transmise et non diffractée par l'élément holographique.

Selon une autre variante de l'invention, l'élément diffractant peut être constitué par un réseau en relief 14' présentant des strates orientées à 45°, comme l'illustre la figure 6a. Ce réseau est recouvert d'une fine couche de matériau d'indice $n_2$, le réseau étant d'indice $n_1$. L'ensemble peut être noyé dans un matériau d'indice $n_1$. Cette architecture simule une fine épaisseur d'un élément holographique tel que décrit précédemment.

L'élément diffractant comprend de part et d'autre de cette architecture des structures à multi-couches diélectriques de manière à assurer des fonctions miroirs $M_1$ et $M_2$ adaptées aux longueurs d'onde d'utilisation.

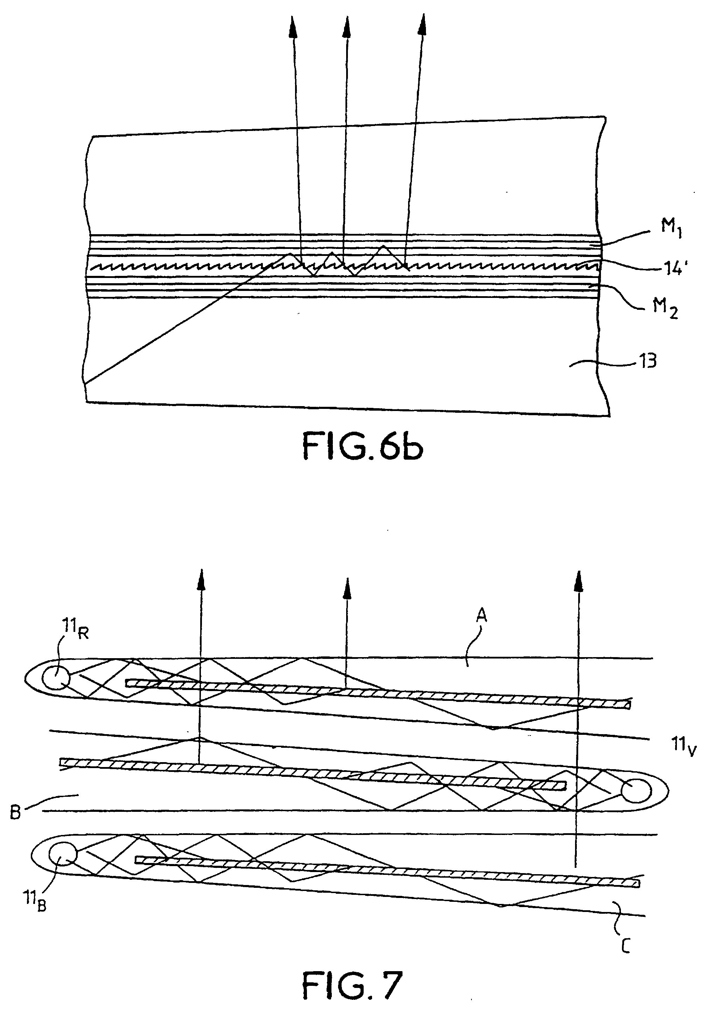

La figure 6b illustre le fonctionnement de ce type d'élément diffractif comprenant une cavité résonante constituée par les miroirs $M_1$ et $M_2$ et un réseau gravé 14'.

Les dispositifs d'éclairage tels que décrits précédemment sont particulièrement intéressants pour des application en visualisation. Pour ce type d'application on superpose trois dispositifs d'éclairage A, B, C. Le dispositif A étant muni d'une source $11_R$ émettant dans le rouge, le dispositif B étant muni d'une source $11_V$ émettant dans le vert, le dispositif C étant muni d'une source $11_B$ émettant dans le bleu. La superposition de ces trois dispositifs est rendue possible en raison de la sélectivité en longueur d'onde des éléments diffractifs. En effet, dans le cas des hologrammes la structure de ces derniers est déterminée en fonction de la source associée, et l'hologramme d'un dispositif donné, est transparent pour une lumière émise par un dispositif d'éclairage adjacent comme illustré en figure 7.

Pour assurer une compacité optimale, les dièdres sont alternés au niveau de leur divergence, c'est-à-dire que le dispositif intermédiaire est disposé de manière à ce que sa source ne soit pas disposée du même côté que les deux autres sources.

D'autre part, la luminance de chaque couleur primaire des tubes fluorescents rouge, vert, bleu que l'on peut employer est sensiblement trois fois supérieure à celle de chaque primaire de tube blanc. on peut ainsi estimer à environ 50 000 Candela/m2 la luminance, obtenu à partir de tubes commerciaux et ce avec un faisceau polarisé et fortement collimaté.

## Revendications

1. Dispositif d'éclairage comprenant une source lumineuse et un guide d'onde de lumière (13) couplé à ladite source lumineuse (11), **caractérisé en ce que** le guide d'onde de lumière comporte un réseau d'indice organisé en strates orientées à environ 45° par rapport à l'axe du guide de lumière, dans un matériau photosensible, pour diffracter des rayons lumineux émergents issus de la source, dans une direction sensiblement perpendiculaire à la surface du guide d'onde.

2. Dispositif d'éclairage comprenant une source lumineuse et un guide d'onde de lumière (13) couplé à ladite source lumineuse (11), **caractérisé en ce que** le guide d'onde de lumière comporte un élément diffractant constitué par un réseau en relief (14') dans le plan du guide présentant des strates orientées à 45° par rapport à la normale au plan du guide de lumière pour diffracter des rayons lumineux émergents issus de la source dans une direction sensiblement perpendiculaire à la surface du guide d'onde.

3. Dispositif d'éclairage selon la revendication 2, **caractérisé en ce que** l'élément diffractant comprend :

   - un réseau gravé (14'), les gravures présentant des flancs indices à environ 45° de la normale à la surface du guide et des flancs parallèles à la normale au plan du guide ;
   - une cavité résonante dans laquelle est intégré le réseau gravé ($M_1$, $M_2$).

4. Dispositif d'éclairage selon la revendication 3, **caractérisé en ce que** le réseau gravé est recouvert d'une couche de matériau d'indice de réfraction $n_2$, l'ensemble étant intégré dans un matériau présentant le même indice de réfraction $n_1$ que celui du réseau.

5. Dispositif d'éclairage selon l'une des revendications 1 à 4, **caractérisé en ce que** l'élément diffractant transmet une lumière polarisée s, définie perpendiculairement au plan d'incidence et diffracte une lumière polarisée p définie dans le plan d'incidence et qu'il comprend des moyens pour convertir la lumière polarisée s en lumière polarisée p.

6. Dispositif d'éclairage selon la revendication 5, **caractérisé en ce qu'**il comprend à l'extrémité du guide, opposée à la source lumineuse, une lame quart d'onde et un miroir parallèle à ladite lame quart d'onde (15) et qu'il comprend également un miroir (16) situé dans un plan parallèle à la surface du guide et opposé au plan d'extraction de la lumière (17).

7. Dispositif d'éclairage pour écran de visualisation, **caractérisé en ce qu'**il comprend une superposition de trois dispositifs d'éclairage selon l'une des revendications 1 à 6, un premier dispositif (A) comportant une source de lumière émettant dans le rouge, un deuxième dispositif (B) comportant une source de lumière émettant dans le vert, un troisième dispositif (C) comportant une source de lumière émettant dans le bleu.

## Claims

1. Illumination device comprising a light source and a light waveguide (13) coupled to the said light source (11), **characterized in that** the light waveguide comprises an index grating organized in strata oriented at about 45° with respect to the axis of the light guide, made of a photosensitive material, in order to diffract emergent light rays coming from the source in a direction substantially perpendicular to the surface of the waveguide.

2. Illumination device comprising a light source and a light waveguide (13) coupled to the said light source (11), **characterized in that** the light waveguide comprises a diffracting element consisting of a relief grating (14') in the plane of the guide having strata oriented at 45° with respect to the normal to the plane of the light guide in order to diffract the emergent light rays coming from the source in a direction substantially perpendicular to the surface of the waveguide.

3. Illumination device according to Claim 2, **characterized in that** the diffracting element comprises:

   - an etched grating (14'), the etchings having indexed flanks at about 45° to the normal to the surface of the waveguide and flanks parallel to the normal to the plane of the guide;
   - a resonant cavity into which the etched grating ($M_1$, $M_2$) is integrated.

4. Illumination device according to Claim 3, **characterized in that** the etched grating is covered with a layer of material having a refractive index $n_2$, the entire unit being integrated into a material having the same refractive index $n_1$ as that of the grating.

5. Illumination device according to one of Claims 1 to 4, **characterized in that** the diffracting element transmits s-polarized light, defined perpendicularly to the plane of incidence, and diffracts p-polarized light, defined in the plane of incidence, and **in that** it comprises means to convert the s-polarized light into p-polarized light.

6. Illumination device according to Claim 5, **characterized in that** it comprises, at the end of the guide, opposite the light source, a quarter-wave plate and a mirror parallel to the said quarter-wave plate (15) and **in that** it also comprises a mirror (16) located in a plane parallel to the surface of the guide and opposite the plane of extraction of the light (17).

7. Illumination device for a display screen, **characterized in that** it comprises the superposition of three illumination devices according to one of Claims 1 to 6, a first device (A) comprising a light source emitting red light, a second device (B) comprising a light source emitting green light and a third device (C) comprising a light source emitting blue light.

**Patentansprüche**

1. Beleuchtungsvorrichtung, die eine Lichtquelle und einen mit der Lichtquelle (11) gekoppelten Lichtwellenleiter (13) umfaßt, **dadurch gekennzeichnet, daß** der Lichtwellenleiter in einem lichtempfindlichen Material ein Indexgitter aufweist, das in Lagen geordnet ist, die unter einem Winkel von etwa 45° in bezug auf die Achse des Lichtleiters orientiert sind, um von der Quelle stammende, austretende Lichtstrahlen in eine Richtung zu beugen, die zur Oberfläche des Wellenleiters im wesentlichen senkrecht ist.

2. Beleuchtungsvorrichtung, die eine Lichtquelle und einen mit der Lichtquelle (11) gekoppelten Lichtwellenleiter (13) umfaßt, **dadurch gekennzeichnet, daß** der Lichtwellenleiter ein Beugungselement umfaßt, das durch ein relief-artiges Gitter (14') in der Leiterebene gebildet ist, das Lagen aufweist, die unter einem Winkel von 45° in bezug auf die Normale der Lichtleiterebene orientiert sind, um von der Quelle stammende, austretende Lichtstrahlen in eine Richtung zu beugen, die zur Oberfläche des Wellenleiters im wesentlichen senkrecht ist.

3. Beleuchtungsvorrichtung nach Anspruch 2, **dadurch gekennzeichnet, daß** das Beugungselement umfaßt:

   - ein graviertes Gitter (14'), wobei die Gravuren Indexflanken, die mit der Normalen der Oberfläche des Leiters einen Winkel von etwa 45° bilden, und Flanken, die zur Normalen der Leiterebene parallel sind, aufweisen;

   - einen Resonanzhohlraum, in den das gravierte Gitter ($M_1$, $M_2$) integriert ist.

4. Beleuchtungsvorrichtung nach Anspruch 3, **dadurch gekennzeichnet, daß** das gravierte Gitter von einer Materialschicht mit Brechungsindex $n_2$ bedeckt ist, wobei die Gesamtheit in ein Material integriert ist, das denselben Brechungsindex $n_1$ wie das Gitter aufweist.

5. Beleuchtungsvorrichtung nach einem der Ansprüche 1 bis 4, **dadurch gekennzeichnet, daß** das Beugungselement polarisiertes Licht s, das senkrecht zur Einfallsebene definiert ist, durchläßt und polarisiertes Licht p, das in der Einfallsebene definiert ist, beugt und daß sie Mittel umfaßt, die das polarisierte Licht s in polarisiertes Licht p umwandeln.

6. Beleuchtungsvorrichtung nach Anspruch 5, **dadurch gekennzeichnet, daß** sie am Ende des Leiters gegenüber der Lichtquelle ein Viertelwellenlängenplättchen sowie einen zum Viertelwellenlängenplättchen (15) parallelen Spiegel und außerdem einen Spiegel (16) umfaßt, der sich in einer zur Oberfläche des Leiters parallelen Ebene befindet, die der Lichtextraktionsebene (17) gegenüberliegt.

7. Beleuchtungsvorrichtung für einen Bildschirm, **dadurch gekennzeichnet, daß** sie eine Überlagerung von drei Beleuchtungsvorrichtungen nach einem der Ansprüche 1 bis 6 umfaßt, wobei eine erste Vorrichtung (A) eine Lichtquelle umfaßt, die im roten Bereich sendet, eine zweite Vorrichtung (B) eine Lichtquelle umfaßt, die im grünen Bereich sendet, und eine dritte Vorrichtung (C) eine Lichtquelle umfaßt, die im blauen Bereich sendet.

FIG.1

FIG. 2

FIG.3

FIG. 4

FIG.5

FIG.6a

FIG.6b

FIG.7